# EUROPÄISCHE PATENTSCHRIFT

(11) **EP 2 913 544 B1**
(45) Veröffentlichungstag und Bekanntmachung des Hinweises auf die Patenterteilung: **28.03.2018**
(21) Anmeldenummer: 15405018.1
(22) Anmeldetag: 26.02.2015
(51) Int. Cl.: F16C 11/06, F16C 43/02, F16C 25/02, F16C 33/04, F16C 17/10, F16C 33/20

(54) **Drehverbindung auf Gleitlagerbasis**
Slewing bearing with sliding elements
Couronne d'orientation en Forme de palier lisse

(30) Priorität: 27.02.2014 CH 2962014
(43) Veröffentlichungstag der Anmeldung: 02.09.2015
(73) Patentinhaber: Gehring, Rudolf, 9315 Neukirch (CH)
(72) Erfinder: Gehring, Rudolf, 9315 Neukirch (CH)

(56) Entgegenhaltungen:
- EP-A2- 2 554 802
- WO-A2-2010/070450
- CH-A- 281 535
- DE-A1-102005 047 625
- DE-A1-102011 013 692

## Beschreibung

### TECHNISCHES GEBIET.

Die vorliegende Erfindung betrifft eine Drehverbindung in Leichtbauweise auf Gleitlagerbasis mit den Funktionseinheiten Aussenring, Innenring und Gleitelementen als Lagerkörper.

### STAND DER TECHNIK

Drehverbindungs-Lager in Leichtbauweise mit Gleitelementen werden in der CH 691 191 und der EP 2 554 802 des Anmelders beschrieben. In der weiteren Beschreibung werden diese Drehverbindungs-Lager gemäss der branchenüblichen Terminologie kurz als Drehverbindungen bezeichnet. Drehverbiridungen sind eine Drehlagerart mit grossem Lagerdurchmesser und im Vergleich dazu kleinen Lagerquerschnitten. Typischerweise haben sie mittlere Durchmesser von 400 mm bis 1000 mm und eine axiale Bauhöhe von 56 mm, welche jeweils bei einem Lagertyp über den gesamten Durchmesserbereich konstant ist. Ein weiteren Unterschied von Drehverbindungen zu normalen Radiallagern besteht darin, dass Aussen- und Innenringe mit Löchern zur Aufnahme von Schrauben zum Befestigen der Ringe an Anschlussteilen versehen sind, während normale Radiallager Ringe ohne Löcher aufweisen und deshalb durch Einpressen öder durch Befestigungsringe mit den Anschlussteilen verbunden werden müssen. Aussen- und Innenring dieser bekannten Drehverbindungen in Leichtbauweise auf Gleitlagerbasis bestehen dabei meist aus Metallblech, das spanlos umgeformt wurde, um eine leichte und doch stabile Form zu erhalten. Der Innenring weist jeweils zwei konische oder konusähnliche Flächen auf, wobei die eine Konusfläche primär Druck-, die andere primär Zugbelastungen aufnimmt und beide zusammen radiale Belastungen und Die Gleitelemente dieser bekannten Drehverbindungen auf Gleitlagerbasis sind dabei räumliche Ringsegmente mit einem im Wesentlichen M-förmigem Querschnitt. Entsprechend dieser Form der Gleitflächen und Gleitelemente werden solche Lager auch als Lager mit M-V-Querschnitt bezeichnet.

Diese räumlichen Gleitelemente sind multifunktionell, dass heisst sie erfüllen neben der Hauptaufgabe, eine tribologisch günstige Gleitfläche zur Verfügung zu stellen mehrere weitere Funktionen. Diese werden weiter unten und in der Beschreibung der Zeichnungen genauer erläutert. Gleitlager mit konischen oder konusähnlichen Gleitflächen sind im Durchmesserbereich von 5 mm bis etwa 200 mm auch als zweireihige Schräglager oder als Gelenklager bekannt. Bei diesen bekannten Ausführungen sind die "Gleitelemente" reine unifunktionelle Oberflächenschichten oder Folien; ihr einziger Zweck besteht darin, die metallenen Ringe durch eine reibungsarme Schicht zu trennen. Bei Ausführungen mit Folien sind diese direkt an einem der beiden Lagerringe befestigt.

Ein solches zweireihiges Schräglager ist zum Beispiel in der FR 972.570 beschrieben. Bei diesem Schräglager sind die massiven Metallringe mit einem Gleitmetall beschichtet. Ein ähnliches Lager wie dasjenige gemäss FR 972.570 ist in der CH 459 668 beschrieben. Auch bei diesem Lager ist das "Gleitelement" die Gleitoberfläche des inneren oder äusseren Ringes. Auch in den dazugehörigen Zeichnungen ist diese Gleitschicht nicht als getrenntes Element offenbart, sondern als speziell behandelter Oberflächenbereich der Metall-Lagerringe.

In der Branche sind auch zweireihige Schräglager und Gelenklager bekannt, bei denen anstelle der in den vorerwähnten Patenten beschriebenen Oberflächenschichten zwischen den metallenen Aussen- und Innenringen dünne Folien aus reibungsarmem Kunststoff eingebaut werden. Sie müssen an einem der beiden Lagerringe befestigt werden, damit sie im Betrieb nicht verrutschen und zerquetscht werden. Zur Befestigung kommt aus wirtschaftlichen Gründen bei diesen dünnen Folien praktisch nur Kleben in Frage. Weil die gleitaktiven Folien aber auch keine gute Haftung für die Klebstoffe gewährleisten ist vor dem Kleben eine aufwendige Oberflächenaktivierung notwendig. Da alle Teile starr sind benötigen alle diese Lagerbauformen zwangsläufig Spiel, um funktionieren zu können. Um dieses Spiel in Grenzen zu halten, müssen die Teile sehr genau gefertigt werden. Im Betrieb können Innenringe und Aussenringe zudem unterschiedlichen Temperaturen unterliegen. Auch die entsprechenden Dehnungsunterschiede müssen innerhalb des Spieles aufgefangen werden können. Diese Bauart eignet sich deshalb nur für kleine Lager. Bei Drehverbindungen sind die Massänderungen allen schon aufgrund der grösseren Durchmesser grösser, zudem müssen sie auch bei den häufig auftretenden Bedingungen einwandfrei funktionieren, bei denen Innen- und Aussenring infolge äusserer Einflüsse erhebliche Temperaturunterschiede aufweisen.

Im Gegensatz zu diesen Ausführungen für kleine Lager weisen bereits die Gleitelemente der Drehverbindungen gemäss dem CH 691 191 und der EP 2 554 802 A wesentliche Vorteile auf und erfüllen mehrere Funktionen gleichzeitig:
- Dank ihrem grossen Querschnitt weisen sie eine frei wählbare Eigenstabilität auf und können deshalb zum Beispiel Vorspannkräfte von Spannfedern auf die Gleitfläche übertragen.
- Ihre dreidimensionale Gestaltung schafft den nötigen Bauraum, um innerhalb ihrer Konturen Federn zum Aufbringen der Vorspannung einzubauen.
- Die so erzeugte Vorspannung ergibt in Kombination mit der MV-Form der Gleitelemente ein spielfreies Lager.
- Diese Kombination von Eigenschaften kompensiert auch allfällige Abnützung, sodass die Lager über ihren ganzen Lebenszyklus spielfrei bleiben.
- Die Gestaltung von Gleitelement und Lagerringen gleicht die unterschiedliche Ausdehnung von Lager-Innen-und -Aussenring aus.
- Die Schrauben zum Befestigen der Drehverbindung an der Anschlusskonstruktion dienen gleichzeitig als Fixierung der Gleitelemente. Deshalb können die Gleitelemente einfach in die Lagerringe eingelegt werden und benötigen keine zusätzliche Befestigung.
-

In der US 2012/0183246 A1 ist ein Gelenklager beschrieben, dessen massiver Aussenring vollständig aus Kunststoff besteht und damit ebenfalls eine reibungsarme Gleitfläche aufweist. Nach dem Zusammenbau stellt dieses Lager ebenfalls ein Lager einfacher Bauart dar, welches innen und aussen glatte zylindrische Flächen aufweist und das damit wie ein handelsübliches Kugellager eingebaut und befestigt werden muss. Dieses Lager weist einen radial geteilten Aussenring auf. In die Trennflächen des Aussenringes sind Stifte eingesetzt respektive Bohrungen eingefügt. Stift und Bohrung sind aber nur gebräuchliche Mittel zur gegenseitigen Positionierung, die Lagerhälften werden damit nicht verbunden.

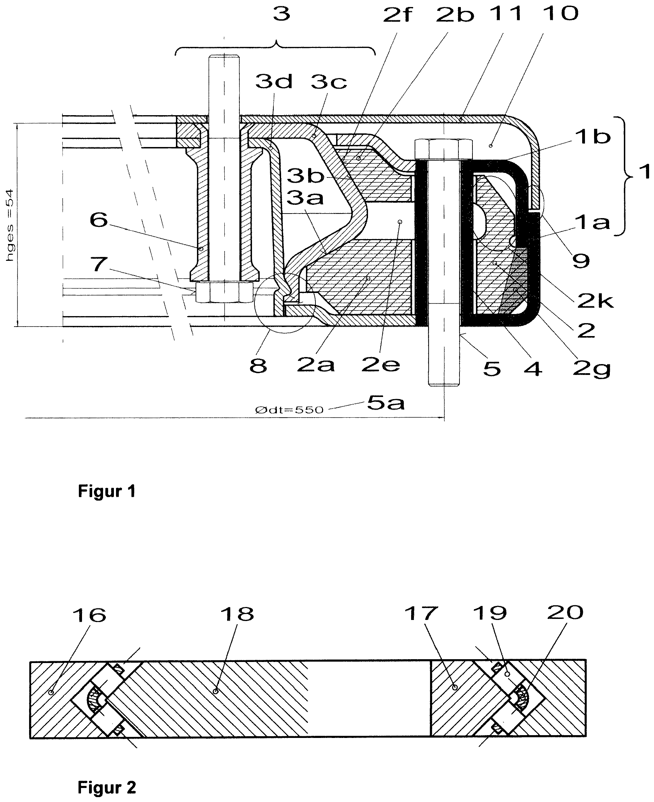

Aufgrund dieses technischen Standes wird im Weiteren nur noch auf die für Drehverbindungen geeignete Ausführung gemäss CH-Patent 691 191 und EPA 2 554 802 eingegangen. Entsprechend den bei Drehverbindungen üblichen Hauptlastrichtungen wird die in den Zeichnungen untere Konusfläche auch als Tragbahn, die obere als Haltebahn bezeichnet. Wie der Innenring weist auch jedes Gleitelement jeweils eine Tragbahn- und eine Haltebahn-Fläche auf. Im radialen Querschnitt weisen die Gleitelemente, wie bereits erwähnt, einen näherungsweise M-förmigen Querschnitt auf. Dabei wird das M liegend angeordnet, die "Basispartie" des M ist nach aussen gerichtet, die beiden konischen inneren Teilelemente des M bilden je eine Gleitbahn. Fig. 1 zeigt eine solche Drehverbindung gemäss EP 2 554 802. Im Querschnitt weisen diese bekannten Drehverbindungen damit eine analoge Grundstruktur auf wie die im Bereich Linear-Wälzlager als M-V-Führungen bekannten Linearführungen (Fig.2).

Die Aussen- und Innenringe dieser Drehverbindungen sind dank der üblichen Metalldrück-Technologie günstig herzustellen. Die Gleitelemente sind primär aus funktionellen Gründen in Umfangsrichtung relativ kurz. Ihre Länge von meist rund 100 mm wurde aber auch deshalb gewählt, damit für das Spritzen der Gleitelemente aus Kunststoff kleine und kostengünstige Spritz-Formen und -Maschinen verwendet werden können. Die Praxis hat aber gezeigt, dass die Montage relativ aufwendig ist und dass die Spritzformen trotz der geringen Grösse relativ teuer sind, weil die M-Form der Elemente Züge (quer zur Schliessrichtung der Spritzform bewegliche Formteile) in den Formen bedingt, was auch eine erhöhte Zykluszeit zur Folge hat.

Bei der Montage werden bei der Standardausführung mit Federvorspannung zuerst die Vorspannfedern montiert. Dann, unabhängig davon, ob mit oder ohne Vorspannung, müssen die Elemente um den Innenring angeordnet werden. Damit die Untergruppe "Innenring mit Gleitelementen" mit vernünftigem Aufwand in den Unterteil des Aussenringes eingebaut werden kann, muss parallel zum Anordnen der Gleitelemente oder anschliessend ein vorzugsweise elastisches Band um die Gleitelemente gelegt werden.

Dieses wird anschliessend wieder entfernt. Diese Montagemethode ist zeitaufwendig und teuer.

### DARSTELLUNG DER ERFINDUNG

Ausgehend von diesem Stand der Technik liegt der Erfindung die Aufgabe zugrunde, die vorgängig beschriebenen Nachteile der bekannten Drehverbindungen auf Gleitlagerbasis zu beseitigen, insbesondere eine Ausführung zu gestalten, welche eine besonders kostengünstige Herstellung der Gleitelemente und eine rationelle Montage der Drehverbindung ermöglicht.

Dies wird erfindungsgemäss dadurch erreicht, dass jedes Gleitelement zweiteilig ausgeführt wird, wobei je ein Teilelement die Tragbahn und eines die Haltebahn beinhaltet. Dadurch lassen sich die Gleitelemente mit wesentlich einfacheren Spritzwerkzeugen, kürzeren Zykluszeiten und damit günstiger herstellen. Dabei handelt es sich bei den Gleitelementen um Gleitkörper aus Kunststoff; man kann sie auch als gleitaktive Lagerkörper bezeichnen; dabei ist es wesentlich, dass es sich bei den Gleitelementen um dreidimensionale Körper handelt.

Zudem wird durch die Zweiteilung die Montage wesentlich vereinfacht. Die beiden Teilelemente werden nachstehend als oberes und unteres Teilelement bezeichnet, wobei "oben" und "unten" lediglich die Lage in den Zeichnungen bezeichnen. Die Grundstruktur der erfindungsgemässen Ausführung bezeichnen wir im Gegensatz zu den bekannten Drehverbindungen in M-V-Form als V-ΔΔ-Aufbau (Vau-DeltaDelta).

Bei einer erfindungsgemässen Gestaltung werden die unteren Teilelemente, welche bereits mit den Muttern bestückt sind, einfach in den Aussenring-Unterteil eingelegt. Anschliessend wird der Innenring in diese Untergruppe bestehend aus Aussenring-Unterteil und den unteren Teilelementen eingelegt. Darauf werden die Stützhülsen und die oberen Teilelemente eingesetzt. Die Reihenfolge dieser beiden Komponenten ist beliebig. Bei der Standardausführung mit spielfreier Vorspannung werden nun die Vorspannschrauben mit dem Federpaket in die Muttern eingeschraubt. Zum Schluss wird Vorspannschrauben mit dem Federpaket in die Muttern eingeschraubt. Zum Schluss wird der Aussenring-Oberteil aufgesetzt. Als Transportsicherung wird die so entstandene Baugruppe mit drei Schrauben zusammengehalten. Diese Montagemethode ist nicht nur einfacher und schneller als die Methode für die einteiligen Gleitelemente nach EP 2 554 802 A, sondern sie benötigt auch keine Hilfsmittel.

Diese getrennte Ausführung mit Teilelementen bietet weitere vorteilhafte Gestaltungsmöglichkeiten. Zum Beispiel ist es möglich, die Federbüchse so lang auszuführen, dass sie in eine Ansenkung des unteren Teilelementes hineinragt. Dies ermöglicht einesteils die Verwendung eines langen Federpaketes mit einer weichen Federcharakteristik und andernteils können das obere Teilelement und das untere Teilelement zueinander positioniert werden. Die weiche Federcharakteristik ermöglicht ein genaues Einstellen der Vorspannung bei grossen Masstoleranzen.

So wird diese Gestaltungsmöglichkeit bei erfindungsgemässen Drehverbindungen unter anderem ausgenützt, die Gleitelemente mit einem einfachen Verbindungssystem zu versehen, und zwar sowohl für die Verbindung der des oberen Teilelementes mit dem unteren Teilelement wie für die Verbindung der kompletten Gleitelemente zu einem geschlossenen Ring. Das Verbindungssystem zwischen kompletten Gleitelementen kann zum Beispiel gebildet werden, indem am einen Ende in Umfangsrichtung ein pilzförmiger Zapfen angespritzt wird und am anderen Ende eine entsprechende T-Nut oder eine T-Bohrung. Diese Ausführungen stellen aber nur je eine Möglichkeit der Gestaltung von Verbindungselementen dar, die Funktion lässt sich auch durch verschiedene andere Formen erreichen, sofern durch entsprechende Mittel an den Gleitelementen eine lösbare oder unlösbare angelenkte (und nicht unbedingt formschlüssige) Verbindung hergestellt wird. Dadurch lassen sich die Gleitelemente bei der Montage einfach aus den Teilelementen und anschliessend die kompletten Elemente zu einer Endloskette zusammenfügen, was die Montage wesentlich erleichtert und die Montagezeiten verkürzt. Die zweiteilige Ausführung der Gleitelemente ermöglicht auch das kostengünstige Integrieren von Formelementen wie lokal begrenzten Anschlagflächen und Rasterelementen, welche eine besonders montagefreundliche Gestaltung des kombinierten Insbesondere ist die Erfindung vorteilhaft bei einer Drehverbindung mit einem Aussenring und /oder Innenring mit kastenförmigem Querschnitt einsetzbar.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine axiale Querschnittsansicht der bekannten Gleit-Drehverbindung gemäss EP 2 554 802 A2;
- Fig. 2: einen Querschnitt durch eine Linear-Wälzlagerführung in MV-Form;
- Fig. 3: eine axiale Querschnittsansicht durch eine erfindungsgemässe Ausführung in einer Schnittebene durch die Stützhülsen;
- Fig. 4: eine axiale Querschnittsansicht durch eine erfindungsgemässe Ausführung in einer Schnittebene durch die Vorspannfedern und Schrauben zur stufenlosen Einstellung der Vorspannkraft;
- Fig. 5: eine radiale und eine tangentiale Schnittansicht durch den Verbindungsbereich zweier nebeneinander liegender Gleitelemente mit einer Ausführungsform des Verbindungssystems;
- Fig. 6: eine Schnittansicht in einer Ebene rechtwinklig zur Drehachse mit einem Verbindungssystem bestehend aus Zapfen und T-Bohrung gemäss Figur 5;
- Fig. 7: eine nebeneinander dargestellte horizontale und eine tangentiale Schnittansicht durch die Schnappverbindung gemäss den Figuren 5 und 6; vergrössert dargestellt;
- Fig. 8: eine weitere Ausführungsform des Verbindungssystems in radialer und tangentialer Schnittansicht sowie in einer Schnittansicht in einer Ebene rechtwinklig zur Drehachse;
- Fig. 9: eine Ansicht eines Verbindungssystems, welches sowohl zur einfachen rechtwinklig zur Drehachse;

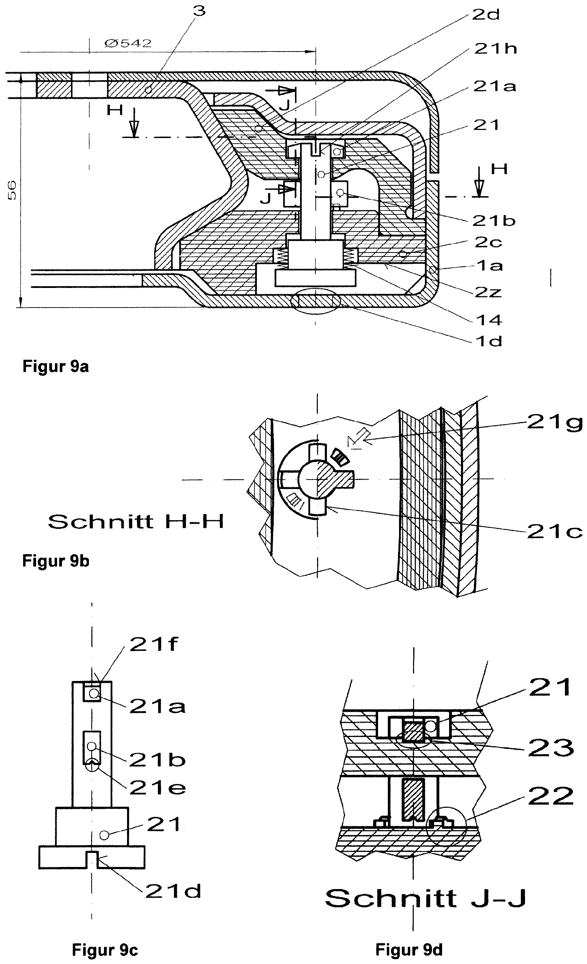

- Fig. 9: eine Ansicht eines Verbindungssystems, welches sowohl zur einfachen Verbindung von oberem und unterem Teilelement wie zum Vorspannen der Drehverbindung dient; und

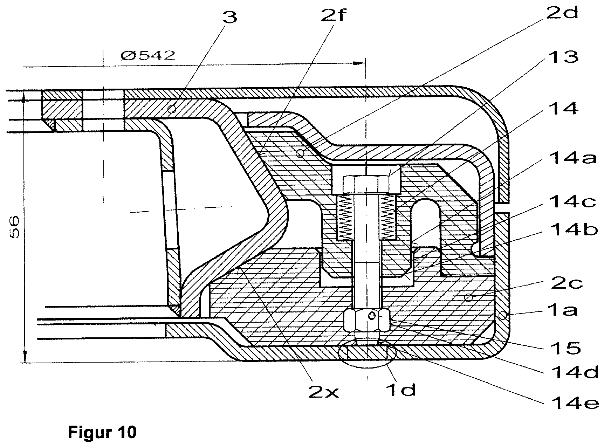

- Fig. 10: eine axiale Querschnittsansicht durch eine erfindungsgemässe Ausführung in einer Schnittebene durch die Vorspannfedern und Schrauben zur stufenlosen Einstellung der Vorspannkraft.

### BESCHREIBUNG BEVORZUGTER AUSFÜHRUNGSFORMEN

Fig. 1 zeigt eine bekannte Ausführungsform einer Gleitdrehverbindung gemäss EP 2554 802 Gleiche beziehungsweise ähnliche Merkmale sind in allen Figuren mit gleichen und ähnlichen Bezugszeichen gekennzeichnet, unabhängig davon, ob das Merkmal aus dem Stand der Technik bekannt ist oder mit der Erfindung hinzugetreten ist.

Bei der dargestellten Ausführungsvariante besteht der Innenring 3 aus dem Tragring 3c und dem Stützring 3d. Diese Drehverbindung enthält zur Abdichtung die Abdeckhaube 11, welche auch den Stauraum 10 und die Labyrinth-Dichtung 9 bildet sowie eine untere Dichtungspartie 8. Ebenfalls dargestellt sind die inneren Schrauben 7, welche nicht zur Drehverbindung gehören, sondern nur zum besseren Verständnis der Funktion gezeigt sind. Bekanntermassen kann der Innenring 3 der Gleitlager aus Metallblech hergestellt werden. Die Gleitelemente 2 bestehen meist aus Kunststoffen mit niedrigem Reibwert. Diese Elemente, welche zum Stand der Technik gehören, sind grundsätzlich auch bei der erfindungsgemässen Drehverbindung vorhanden, werden aber nicht weiter beschrieben.

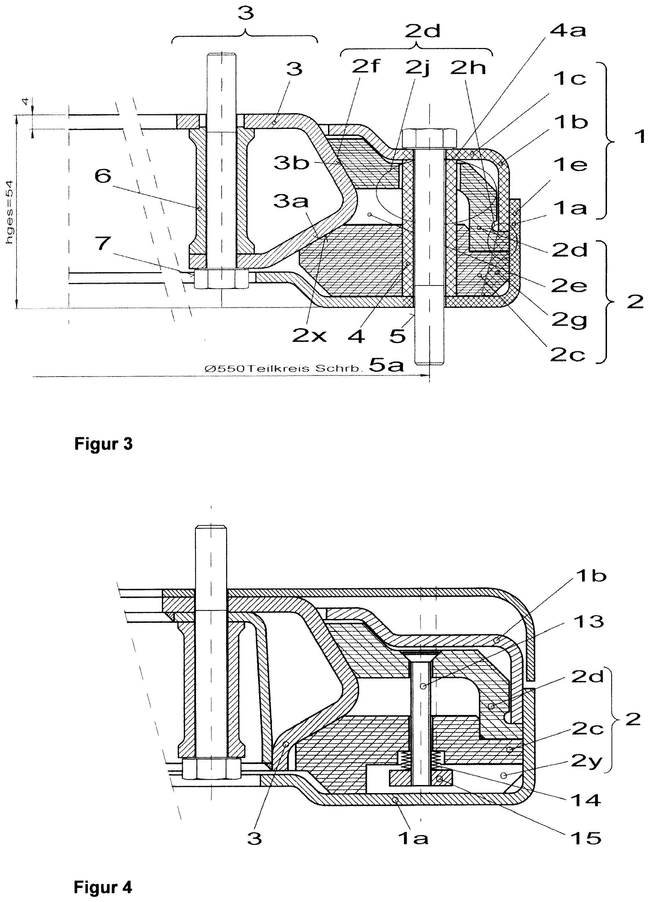

Der Teilkreis-Durchmesser 5a der dargestellten Drehverbindung beträgt 550mm, die Gesamthöhe hges ohne die Abdeckhaube 11 beträgt 54 mm. Die Gleitelemente 2 sind einteilig und weisen zwischen dem unteren Schenkel 2a und dem oberen Schenkel 2b eine Aussparung 2e auf. Diese Aussparung 2e ermöglicht es, das Gleitelement 2 so zu gestalten, dass sein Gelenkbereich 2k als elastisches Gelenk dient. Dadurch lässt sich der Gleitbahnbereich 2f des Gleitelementes 2 mittels in dieser Figur nicht sichtbarer Federn an Zusammenhang beschrieben und in Figur 4 dargestellt. Dank der Kombination von Elastizität und Anpressung lassen sich auch die Fertigungstoleranzen der einzelnen Teile überbrücken. Diese funktionell bedingte Aussparung 2e hat aber den Nachteil, dass die Herstellung der Gleitelemente dadurch relativ kompliziert und teuer wird. Bei grösseren Serien werden die Gleitelemente 2 üblicherweise gespritzt. Die Aussparung 2e bedingt dabei Formen mit sogenannten "Zügen". Die Nachteile dieser Gestaltung sind in der Beschreibung des technischen Standes erklärt. Aufgrund der Grundgestalt dieses Lagers, bei der der Innenringquerschnitt auf jeder Seite grob die Form eines liegenden V und die Gleitelemente die Form eines liegenden M haben wird diese Grundform auch als MV-Lager bezeichnet (siehe Fig. 2). Die geschlossene Kreisform der Drehverbindung hat aber zur Folge, dass Gleitdrehverbindungen in MV-Form nicht einfach wie die MV-Linearführungen gemäss Fig. 2 zusammengesetzt werden können, sondern dass der Aussenring 1 aus einem Aussenring-Unterteil 1a und einem Aussenring-Oberteil 1b bestehen muss und dass die Gleitelemente 2 keinen geschlossenen Ring bilden können, sondern einen segmentierten Ring aus mehreren Elementen. Die zweite Forderung stellt allerdings keinen praktischen Nachteil dar, weil die Gleitdrehverbindung aus funktionellen Gründen sowieso aus mehreren Gleitelementen 2 besteht. Üblicherweise sind das zwischen sechs und zweiunddreissig Gleitelemente 2. Nur für Anwendungen mit untergeordneten Ansprüchen und kleinen Stückzahlen ist eine Gleitdrehverbindung nach Offenlegungsschrift EP 2 554 802 A2 (Fig. 1) auch mit nur 2 Gleitelementen zweckmässig. Der M-förmige Querschnitt bedingt aber auch, wie im Stand der Technik beschrieben, eine aufwendige Montagemethode

Fig. 2 zeigt eine Wälzlager-Linearführung in MV-Form. Dabei bedeutet 16 die M-Schiene, 17 eine einfache V-Schiene und 18 eine Doppel-V-Schiene. Die Linearführung enthält als Lagerkörper Zylinderrollen 19. Diese Zylinderrollen 19 werden im Winkelkäfig 20 gehalten und geführt. MV-Schienen sind Linearfiihrungssysteme mit endlichem Hub. Üblicherweise bilden 2 Schienenpaare bestehend aus je einer M-Schiene 16 und einer einfachen V-Schiene 17 zusammen mit den Zylinderrollen 19 und dem Winkelkäfig 20 eine komplette MV-Linearführung. Bei Sonderausführungen, besonders bei kleinen Abständen zwischen den beiden Schienenpaaren, können die beiden inneren einfachen V-Schienen 17 auch zu einer Doppel-V-Schiene 18 vereinigt sein. Die beiden M-Schienen sind am einen Bauteil einer Maschine, zum Beispiel an einem Maschinengestell, befestigt, die beiden einfachen V-Schienen 17 an einem anderen Maschinenteil, zum Beispiel an einem Schlitten. Das Spiel oder allenfalls eine leichte Vorspannung von MV-Linearführungen werden dadurch eingestellt, dass eine Schiene, zum Beispiel eine M-Schiene 16 quer zur Bewegungsrichtung angestellt oder angepresst wird. Die Gleitdrehverbindung nach Fig. 1 entspricht im Querschnitt einer Wälzlager-Linearführung in MV-Form. Dabei entspricht der Innenring 3 der Drehverbindung einem Paar einfacher V-Schienen 17, die Gleitelemente 2 und der Aussenring 1 entsprechen zusammen dem Paar M-Schienen 16 und den Wälzkörpern 19. Infolge des geschlossenen Systems ist aber eine Einstellung des Spiels mittels Querverschiebung eines Lagerteiles nicht möglich. Deshalb weisen die Gleitdrehverbindungen Gleitelemente 2 mit einem Gelenkbereich 2k und den unter Fig. 4 beschriebenen Anpressfedern auf.

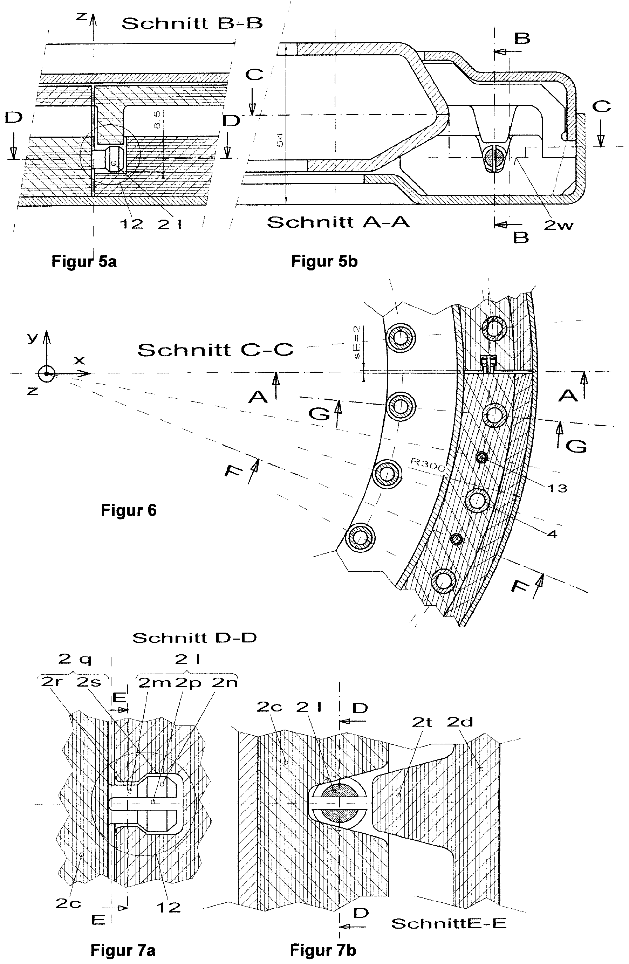

Fig. 3 zeigt eine Ausführungsform der erfindungsgemässen Drehverbindung in einer axialen Querschnittsansicht durch die Stützhülsen 4 (Schnitt G-G in Fig. 6). Der Innenring 3 ist hier gemäss einer Variante der Drehverbindung gemäss EP 2554 802 dargestellt, bei welcher er aus dem Tragring 3c und den taillierten Stützhülsen 6 besteht. Sie ist ähnlich wie die Drehverbindung gemäss Fig. 1 ausgestaltet und gleiche Merkmale sind gleich ausgeführt, sie weist jedoch nachfolgend beschriebene erfindungsgemässe Verbesserungen auf. Jedes Gleitelement 2 besteht aus dem unteren Teilelement 2c und dem oberen Teilelement 2d. Das obere Teilelement 2d weist einen Klemmbord 2h, einen Brückenbereich 2j und einen Bereich mit der Gleitfläche 2f auf. Der Brückenbereich 2j ist elastisch und dient deshalb gleichzeitig als Gelenk. Die beiden Gleitelement-Teile unteres Teilelement 2c und oberes Teilelement 2d werden im kreuzweise schraffierten Druckbereich 2g durch den Aussenring-Oberteil 1b und den Aussenring-Unterteil 1a mittels der Schrauben 5 verspannt. Vor dem Verspannen hat es zwischen der oberen Stirnfläche 4a der Stützhülse 4 und dem horizontalen Bereich 1c des Aussenring-Oberteils 1b einen Spalt. Beim Anziehen der Schrauben 5 drückt der Aussenring-Oberteil 1b zuerst nur auf den kreuzweise schraffiert dargestellten Druckbereich 2g der beiden Gleitelementteile, der sich über das obere Teilelement 2d und das untere Teilelement 2c erstreckt. Beim weiteren Anziehen der Schrauben 5 verformt sich das Aussenring-Oberteil 1b leicht und liegt nun auch auf der Stirnfläche 4a der Stützhülse 4 auf. Dank dieser kraftschlüssigen Verbindung und der gegenseitigen Positionierung durch die Stützhülsen 4 wirken die zusammengesetzten Gleitelemente 2 gleich wie die einteiligen Gleitelemente 2 nach dem Stand der Technik in Fig. 1. Die kreuzweise schraffieren Teile, also der äussere Bereich des Aussenring-Unterteils 1a, der äussere Bereich des Aussenririg-Oberteils 1b, die Stützhülse 4 und der Klemmbereich 2g der Gleitelemente 2 bilden zusammen mit den Stützhülsen 4 wiederum den kastenartig geschlossenen Querschnitt. Funktionell sind die Ausführungen gemäss Fig. 1 und Fig. 3 gleichwertig.

Fig. 4 zeigt eine Ausführungsform der erfmdungsgemässen Drehverbindung mit einem System zum Verbinden der Teilelemente 2c und 2d sowie zum Vorspannen der Drehverbindung in einer axialen Querschnittsansicht durch das Federpaket 14 (Schnitt F-F in Fig. 6). Bei dieser Form dient die Schraube 13 gleichzeitig zum Verbinden des oberen Teilelementes 2d mit dem unteren Teilelementes 2c zu einem Gleitelement 2 sowie als Mittel zum stufenlosen Einstellen der Vorspannkraft auf die Drehverbindung. Die Vorspannkraft wird durch das Federpaket 14 erzeugt und über die Mutter 15 und die Vorspannschraube 13 auf das obere Teilelement 2d übertragen. Diese Schraubverbindung ermöglicht es, dass die Vorspannkraft jeder Drehverbindung optimal auf die spezifischen Anforderungen des zukünftigen Einsatzes abgestimmt werden kann. Die Mutter 15 ist in der Nut für Nutenstein 2y gegen Verdrehen gesichert. Bei der Montage der Drehverbindung werden zuerst die beiden Teilelemente zum kompletten Gleitelement 2 verbunden und anschliessend um den Innenring 3 gelegt. Dabei wird jeweils ein Gleitelement 2 mittels der Schnappverbindung 12 gemäss den Figuren 5 bis 8 der wachsenden Kette von Gleitelementen 2 beigefügt und am Schluss das vorerst offene C zu einem geschlossenen Ring verbunden. Darauf wird der Aussenring-Oberteil 1b über die Montagegruppe bestehend aus Innenring 3 und Gleitelementen 2 gelegt und darauf diese ganze Montagegruppe auf den Kopf gestellt. Anschliessend werden die Stützhülsen 4 (Fig. 3) eingesetzt und der Aussenring-Unterteil 1a aufgesetzt. Die komplette Drehverbindung wird zum Schluss mit 3 oder 4 Schrauben 5 (Fig. 3) für Lagerung und Transport verbunden.

Fig. 5 zeigt eine Ausführungsform der erfindungsgemässen Drehverbindung mit einem zusätzlichen Funktionselement. Die Fig. 5 zeigt dabei nebeneinander eine (rechts, in Fig. 5b, dargestellte) radiale und eine (links, in Fig. 5a, dargestellte) tangentiale Schnittansicht durch den Verbindungsbereich zweier nebeneinander liegender Gleitelemente 2 mit einer Ausführungsform des Verbindungssystems. Hinzu tritt mit der Fig. 6 eine Schnittansicht in einer Ebene rechtwinklig zur Drehachse mit dem Verbindungssystem nach Fig. 5 bestehend aus Zapfen und T-Bohrung.

Bei den Gleitelementen 2 dieser Ausführungsform ist ein Verbindungssystem in Form einer Schnappverbindung 12 integriert, welche das Zusammenstecken der einzelnen Gleitelemente 2 zu einem geschlossenen Ring ermöglicht. Durch diese Schnappverbindung 12 wird die Montage der Drehverbindung wesentlich erleichtert, wodurch die Montagezeit reduziert und die gesamte Baugruppe verbilligt wird. Die Schnitte der Fig. 5 zeigen die Drehverbindung etwa im Massstab 1:1.4. Die Schnittebene der Darstellung links liegt tangential parallel zur z-Achse, diejenige rechts ist eine radiale x-z-Ebene. Dieser Radialschnitt verläuft im Spalt zwischen zwei Elementen. Um diese Schnappverbindung besser darstellen zu können, ist sie in Figur 7 etwa im Massstab 2:1 vergrössert (insbesondere gegenüber den Darstellungen der Fig. 5) dargestellt.

Die Figs. 5 bis 7 zeigen beispielhaft eine Ausführungsform des erfindungsgemässen Verbindungssystems. Sinnvollerweise enthält jedes Gleitelement am einen Ende die Öffnung oder Steckdose einer Art Druckknopfsystem und am anderen Ende den pilzförmigen Steckzapfen. Das erfindungsgemässe Verbindungssystem kann aber auch realisiert werden, indem zwei Arten von Gleitelementen verwendet werden. Ein Typ enthält dann an jedem Ende eine Steckdose und der andere Typ an jedem Ende einen Steckzapfen. Vorteilhafterweise sind dabei die Verbindungskomponenten des Verbindungssystems einstückig in die Gleitelemente 2 integriert.

Fig. 6 ist ein Horizontal-Teilschnitt durch eine erfindungsgemässe Drehverbindung. Der Schnittverlauf C-C ist in Fig. 5 angegeben. Gleichzeitig ist in Fig. 6 die Schnittlinie A-A der Darstellung der Fig. 5b (rechts) eingezeichnet. In dieser Figur 6 sind auch die Achsen bezeichnet. Diese Darstellung, etwa im Massstab 1:2, gibt einen Überblick über das Verbindungssystem.

Fig. 7 zeigt die in den Figuren 5 und 6 grob beschriebene Ausuhrungsform eines Verbindungssystems im Detail, wobei die Schnittdarstellung der Fig. 7a (links), sich aus der Darstellung der Fig. 5a (links), entlang der Linie D-D ergibt. Die Darstellung der Fig. 7b (rechts) ist eine Schnittdarstellung der Fig. 7a (links), die sich aus der Darstellung Verbindungssystems im Detail, wobei die Schnittdarstellung der Fig. 7a (links), sich aus der Darstellung der Fig. 5a (links), entlang der Linie D-D ergibt. Die Darstellung der Fig. 7b (rechts) ist eine Schnittdarstellung der Fig. 7a (links), die sich aus der Darstellung entlang der Linie E-E ergibt. Bei dieser Ausführungsform der Schnappverbindung weist jedes untere Teilelement 2c am einen Ende in Umfangsrichtung einen Verbindungszapfen 2l und am andern Ende eine T-Nut 2q auf. Der Durchmesser des Zapfenkopfes 2n und die Breite des Nut-Hinterstiches 2s sind grösser als der zugehörige Durchmesser des Zapfenhalses 2m und grösser als die Breite des Nuthalses 2r. Dank dem Schlitz 2p lässt sich der Zapfenkopf 2n durch den Nuthals 2r in den Nut-Hinterstich 2s schieben. Nach der Passage durch den Nuthals 2r kann der Verbindungszapfen 2l wieder in seine ursprüngliche Form zurückfedern. Dadurch werden die zwei nebeneinander liegenden Gleitelemente 2 miteinander verbunden. Die Gleitelemente 2 sind zweckmässigerweise bereits gemäss der Beschreibung zu Fig. 4 mittels der Vorspannschrauben 13 und der Mutter 15 zu einer Montagegruppe verbunden. Die Komponenten sind also dabei an jedem freien Ende von jedem Teilelement 2c bzw. 2d in Umfangsrichtung vorgesehen, um mit komplementären Komponenten des benachbarten Teilelements verbindbar zu sein. Das Grundprinzip der Schnappverbindung ist der pilzförmige Zapfen 2*l* mit einer komplementären hinterschnittenen Ausnehmung.

Aus fertigungstechnischen Gründen ist die Mitte des pilzförmigen Zapfens 2l in der Trennebene 2w des Spritzwerkzeuges. Aus dem gleichen Grund wird am anderen Ende des unteren Teilelementes 2c keine Bohrung angebracht, sondern nur eine im Schnitt E-E U-förmige T-Nut 2q. Durch diese T-Nut 2q im unteren Teilelement 2c sind die Gleitelemente aber erst in radialer und tangentialer Richtung verbunden sowie in einer axialen Richtung. Zur Fixierung in der axialen Gegenrichtung ist am oberen Teilelement 2d deshalb ein Verschluss-Nocken 2t angebracht. Damit fixiert die Schnappverbindung 12 die nebeneinander liegenden Gleitelemente in allen Richtungen. Dank der zweiteiligen Ausführung der Gleitelemente 2 lässt sich so eine geschlossene Aufnahme für den Zapfenkopf 2n ohne Spritzwerkzeug mit Zügen bilden Die Schnappverbindungen 12 weisen aber soviel Spiel auf, dass der noch c-förmig offene Ring der Gleitelemente zum Einsetzen des letzten Gleitelementes etwas geöffnet werden kann.

Teilelement 2c wie das obere Teilelement 2d enthalten jeweils am einen Ende einen Verbindungszapfen 2l und am anderen Ende eine T-Nut 2q. Der Schnappvorgang wird beim unteren Teilelement 2c erreicht durch zwei elastische Lappen 2v und beim oberen Teilelement 2d durch den elastischen Zapfenhals 2u. Dadurch können die Gleitelemente 2 in gleicher Weise zusammengesteckt werden wie diejenigen gemäss den Figs. 5-7. Hier ist das Verbindungssystem im unteren Teilelement 2c unterhalb der unteren Oberfläche der Aussparung 2e in dem Material des Teilelementes versenkt, während im oberen Teilelement 2d der angespritzte Zapfen in diese Aussparung hineinragt, da die Bauhöhe des oberen Teilelementes 2d in der dargestellten Ausführungsform kleiner als die notwendige Bauhöhe für die Nut-Feder-Verbindung ist. Das kann natürlich auch umgekehrt vorgesehen sein. Das Verbindungssystem ist in einem radialen Abstand von der Mitte des Lagers vorgesehen, der kleiner als der Mittenabstand der Stützhülsen 4 ist. Da die durch das Verbindungssystem erreichte Verbindung der einzelnen Teilelemente 2c oder 2d Spiel aufweist, kann die Wahl des Radius im oberen bzw. unteren Teilelement 2c oder 2d unterschiedlich sein und sich insbesondere nach räumlichen Gesichtspunkten richten. Insbesondere können die Verbindungssysteme an unterschiedlichen Radien vorgesehen sein.

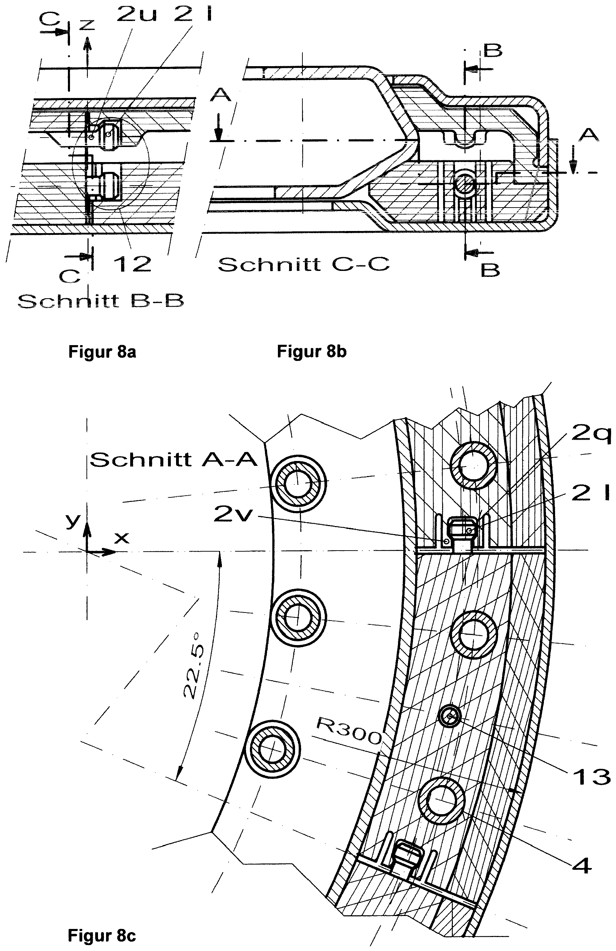

Ebenso kann der gleiche Grundgedanke realisiert werden, indem jedes Gleitelement an jedem Ende eine Steckdose bildende Ausnehmung, beispielsweise nach der Schnittdarstellung A-A der Fig. 8 mit in dieser vorgesehenen zwei flexiblen Enden 2v, enthält und die Gleitelemente 2c bzw. 2d durch getrennte Verbindungszapfen-Elemente, die für jede Verbindung zwischen zwei benachbarten Gleitelementen vorgesehen sind, miteinander verbunden werden. Diese sind dann hantelförmig mit zwei Verdickungen an den gegenüberliegenden Enden und einem Mittelabschnitt mit reduziertem Durchmesser.

Fig. 9 zeigt eine alternative Ausführungsform zum Verbindungs- und Vorspannsystem gemäss Fig. 4. Gleiche oder ähnliche Merkmale, wie sie im Zusammenhang mit der Fig. 4 beschrieben worden sind, haben hier die gleichen Bezugszeichen erhalten und werden im folgenden nicht mehr getrennt erläutert. In vielen Anwendungsfällen ist die stufenlose Einstellung der Vorspannkraft, wie sie in der Ausführungsform gemäss Fig. 4 vorgesehen ist, nicht notwendig.

Für diese Fälle zeigt die Fig. 9 ein Verbindungssystem für die beiden Teilelemente 2c und 2d, welches wiederum dank der zweiteiligen Ausführung der Gleitelemente besonders günstig ausgeführt werden kann. Diese Ausführung kann mit der Stützhülse 6 des Innenrings 3 kombiniert werden. Der Verbindungsbolzen 21 bildet dabei zusammen mit den Vorspannfedern 14 ein zweistufiges Verbindungssystem für die Teilelemente 2c, 2d in Form eines Drehverschlusses. Der Verbindungsbolzen 21 ist oben schlüsselartig mit zwei Verriegelungsflügeln 21a versehen und in der Mitte mit zwei Positionierflügeln 21b; er hat dadurch ungefähr die Form eines Schlüssels mit 2 Doppelbärten.

Diese Form erkennt man insbesondere im Schnitt H-H in Fig. 9b. Im Bereich der Verriegelungsflügel 21a und der Positionierflügel 21b sind die Querschnitte identisch. Der Querschnitt der Durchgänge 21c in den Teilelementen 2c und 2d entspricht dem Querschnitt des Verbindungsbolzens im Bereich der Verriegelungsflügel 21a, ist aber natürlich leicht grösser, sodass der Verbindungsbolzen 21 leicht durch die Durchgänge 21c geschoben werden kann.

Zum Verbinden der Teilelemente 2c und 2d werden diese "auf den Kopf" gestellt, das heisst das obere Teilelement 2d unten und das untere Teilelement 2c oben angeordnet, und in eine Montageunterlage gelegt. Das Federpaket 14 wird auf den Verbindungsbolzen 21 gesteckt und dieser anschliessend durch die Durchgänge 21c geschoben. Die Montageunterlage weist eine Anschlagfläche für die Stirnfläche 21f des Verbindungsbolzens 21 auf. Der Verbindungsbolzen 21 wird soweit in die Durchgänge 21c hineingestossen, bis er auf der Anschlagfläche der Montageunterlage ansteht. Nun wird der Verbindungsbolzen mit einem Schraubenzieher über den Schlitz 21d im Bolzenkopf um 45° gedreht. Die richtige Position für diese Drehbewegung ist mit einem Pfeil 21g auf dem Nutgrund 2z gekennzeichnet. Nun wird der Schraubenzieher weggezogen und das Federpaket 14 fixiert die Positionierflügel 21b mit der Positionierkerbe 21e am Rasterkamm 22. Die Teilelemente 2c und 2d sind nun so miteinander verbunden, dass sie beim Zusammenfügen der einzelnen Gleitelemente 2 um den Innenring 3 genau an der Tragbahn 3a und der Haltebahn 3b des Innenringes anliegen, ohne durch das Federpaket 14 nach aussen gedrückt zu werden. Die Gleitelemente werden nun wieder so umgedreht, dass das untere Teilelement 2c unten und das obere Teilelement 2d oben ist. Anschliessend fügt man die vormontierten Gleitelemente 2 mittels der Verbindungszapfen 2l zu einer Ringkette zusammen und legt sie gleichzeitig um den Innenring 3. Die Baugruppe bestehend aus dem Innenring 3 und dem Ring aus den Gleitelementen 2 wird nun in den Aussenring-Unterteil 1a eingesetzt.

Darauf werden die Stützhülsen 4 (siehe Fig. 3) eingesetzt und die Ringkette aus den Gleitelementen 2 auf die Befestigungsbohrungen 1d ausgerichtet. Nun kann man die Verbindungsbolzen 21 über den Schlitz 21h um weitere 45° drehen. Dabei werden die Positionierflügel 21b aus dem Rasterkamm 22 gehoben; die Verriegelungsflügel 21a werden durch das Federpaket 14 in die Sicherungsnut 23 gezogen und damit formschlüssig in ihrer Lage gesichert. Gleichzeitig wird die Vorspannkraft der Federpakete 14 auf die Gleitflächen 2f, 2x, 3a und 3b (Fig. 3) aufgebracht. Die Drehverbindung wird zum Schluss fertig montiert.

Fig. 10 zeigt eine Ausführungsform der erfindungsgemässen Drehverbindung mit einem System zum Vorspannen der Drehverbindung in einer axialen Querschnittsansicht durch das Federpaket 14. Bei dieser Form dient die Schraube 13 gleichzeitig zum stufenlosen Einstellen der Vorspannkraft auf die Drehverbindung sowie als Mittel zum Verbinden des oberen Teilelementes 2d mit dem unteren Teilelement 2c zu einem Gleitelement 2. Die Vorspannkraft wird durch das Federpaket 14 erzeugt und über die Mutter 15 und die Vorspannschraube 13 auf das obere Teilelement 2d übertragen. Diese Schraubverbindung ermöglicht es, dass die Vorspannkraft jeder Drehverbindung optimal auf die spezifischen Anforderungen des zukünftigen Einsatzes abgestimmt werden kann. Die Mutter 15 ist in der Sechskantaussparung 14d in das untere Teilelement 2c eingegossen und damit gegen Verdrehen gesichert. An die Mutter 15 schliesst sich die Sicherungspartie 14e an. Die Bohrung in dieser Partie ist einige Zehntelmillimeter kleiner als der Aussendurchmesser der Vorspannschraube 13. Beim Eindrehen der Vorspannschraube 13 in die Sicherungspartie 14e muss deshalb diese Sicherungspartie verformt werden. Die dazu notwendigen Verformungskräfte sichern die Vorspannschraube gegen losdrehen. Bei kleinen Fertigungslosen können die Gleitelemente 2 auch aus Kunststoff-Halbfabrikaten spanend hergestellt anstatt gespritzt werden. Bei diesem Herstellverfahren kann natürlich die Sechskantaussparung 14d bis zur Stirnfläche des unteren Teilelementes 2c gezogen werden. Die Mutter kann dann eingepresst oder eingeklebt und die Vorspannschraube zum Beispiel mit Klebstoffen gesichert werden. Die Federbüchse 14a ist mit einer Fase 14b versehen. Diese Fase erleichtert das Positionieren des oberen Teilelementes 2d gegenüber dem zuerst eingebauten unteren Teilelement 2c und trägt damit zusätzlich zur Reduktion der Montagezeit bei.

**BEZUGSZEICHENLISTE**

| | | | |
|---|---|---|---|
| 1 | Aussenring | 3 | Innenring |
| 1a | Aussenring-Unterteil | 3a | Tragbahn |
| 1b | Aussenring-Oberteil | 3b | Haltebahn |
| 1c | horizontaler Bereich | 3c | Tragring |
| 1d | Befestigungsbohrung | 3d | Stützring |
| 1e | Zentrierteil des Aussenrings | 4 | Stützhülse |
| 2 | Gleitelement | 4a | Stirnfläche |
| 2a | Unterer Schenkel | 5 | Schrauben |
| 2b | Oberer Schenkel | 5a | Teilkreis-Durchmesser |
| 2c | Unteres Teilelement | 6 | Taillierte Stützhülse |
| 2d | Oberes Teilelement | 7 | innere Schraube |
| 2e | Aussparung | 8 | Dichtungspartie |
| 2f | Obere Gleitfläche | 9 | Labyrinth-Dichtung |
| 2g | Druckbereich | 10 | Stauraum |
| 2h | Klemmbord | 11 | Abdeckhaube |
| 2j | Brückenbereich | 12 | Schnappverbindung |
| 2k | Gelenkbereich | 13 | Vorspannschraube |
| 21 | Pilzförmiger Zapfen (K_{[**A8**]}) | 14 | Federpaket |
| 2m | Zapfenhals | 14a | Federbüchse |
| 2n | Zapfenkopf | 14b | Fase |
| 2p | Schlitz | 14c | Ansenkung |
| 2q | T-Nut | 14d | Sechskantaussparung |
| 2r | Nuthals | 14e | Sicherungspartie |
| 2s | Nut-Hinterstich | 15 | Mutter |
| 2t | Verschluss-Nocken | 16 | M-Schiene |
| 2u | Elastischer Zapfenhals | 17 | einfache V-Schiene |
| 2v | Elastische Lappen | 18 | Doppel-V-Schiene |
| 2w | Trennebene | 19 | Zylinderrollen |
| 2x | Untere Gleitfläche | 20 | Winkelkäfig |
| 2y | Nut für Nutenstein | 21 | Verbindungsbolzen |
| 2z | Nutgrund | 21a | Verriegelungsflügel |
| 21b | Positionierflügel | | |
| 21c | Durchgang | | |
| 21d | Schlitz im Bolzenkopf | | |
| 21e | Positionierkerbe | | |
| 21f | obere Stirnfläche | | |
| 21g | Pfeil | | |
| 21h | oberer Schlitz | | |
| 22 | Rasterkamm | | |
| 23 | Sicherungsnut | | |

## Patentansprüche

1. Drehverbindungs-Lager in Leichtbauweise auf Gleitlagerbasis mit den Funktionseinheiten Aussenring (1), Innenring (3) und zwischen diesen angeordneten Gleitelementen, welche 2 im Wesentlichen konische Gleitflächen (2f, 2x), einen Bereich mit Klemmbord (2h) und einen Brückenbereich(2j) enthalten als Lagerkörper, **dadurch gekennzeichnet, dass** jedes Gleitelement (2) aus zwei Teilelementen (2c, 2d) besteht, von denen jedes eine im Wesentlichen konische Gleitfläche (2f, 2x) aufweist und dass jedes Gleitelement (2) Verbindungskomponenten (2q, 2ℓ, 21) eines Verbindungssystems aufweist, mit denen die Gleitelemente miteinander verbunden werden und die Teilelemente (2c, 2d) mittels Vorspannschrauben (13) respektive Verbindungsbolzen (21) miteinander verbunden werden wobei die Vorspannschrauben (13) respektive die Verbindungsbolzen (21) zusätzlich mittels eines Federpakets (14) eine bestimmte Vorspannung auf die Gleitflächen (2f) geben.

2. Drehverbindungs-Lager nach Anspruch 1, **dadurch gekennzeichnet, dass** jedes Gleitelement (2) an jedem freien Ende in Umfangsrichtung Verbindungskomponenten (2q bzw. 21) eines Verbindungssystems aufweist, welche zusammen eine Schnappverbindung des Typs Druckknopf (12) ergeben.

3. Drehverbindungs-Lager nach Anspruch 2, **dadurch gekennzeichnet, dass** die Schnappverbindung (12) aus einem pilzförmigen Zapfen (21) am einen Ende jedes Gleitelements (2c bezw. 2d) und einer hinterschnittenen Ausnehmung (2q) am anderen Ende jedes Gleitelements (2c bzw. 2d) besteht und dass eine der Verbindungskomponenten so elastisch ist, dass die Verbindung beim Zusammenstecken einschnappt.

4. Drehverbindungs-Lager nach einem der Ansprüche 2 bis 3, **dadurch gekennzeichnet, dass** die Verbindungskomponenten des Verbindungssystems einstückig in die Gleitelemente (2) integriert sind.

5. Drehverbindungs-Lager nach einem der Ansprüche 2 bis 3, **dadurch gekennzeichnet, dass** die Gleitelemente (2) an jedem freien Ende Aufnahmen für getrennte Verbindungselemente aufweisen.

6. Drehverbindungs-Lager nach Anspruch 1, **dadurch gekennzeichnet, dass** die beiden Teilelemente (2c, 2d) eines Gleitelementes (2) durch Verbindungsbolzen (21) miteinander verbunden werden, welche einen Drehverschluss bilden und Konstruktionselemente für zusätzliche Funktionen aufweisen, wobei diese Konstruktionselemente einesteils Positionierflügel (21b) sind, welche in einer ersten Stellung des Verbindungsbolzens (21) die Teilelemente (2c, 2d) in einer bestimmten gegenseitigen Lage fixieren und andernteils Verriegelungsflügel (21a), welche in einer zweiten Stellung des Verbindungsbolzens (21) das Federpaket (14) zusammendrücken und so die Vorspannung des Federpaketes (14) auf die Gleitflächen (2f, 2x) aufgebracht wird.

7. Drehverbindungs-Lager nach Anspruch 6, **dadurch gekennzeichnet, dass** die Verbindungsbolzen (21) die Form einer Art zweibärtigen Schlüssels aufweisen.

8. Drehverbindungs-Lager nach Anspruch 7, **dadurch gekennzeichnet, dass** die Teilelemente (2c, 2d) mit einem Rasterkamm (22) und einer Sicherungsnut (23) versehen sind, welche das Verbindungselement (21) mittels Positionierkerben (21e) in einer Montageposition fixieren und mittels Verriegelungsflügel (21a) in einer Betriebsposition sichern.

9. Drehverbindungs-Lager nach einem der Ansprüche 1 bis 8, **dadurch gekennzeichnet, dass** die unteren Teilelemente (2c) und die oberen Teilelemente (2d) durch ein Aussenring-Oberteil (1b) miteinander verspannt sind und dass die Höhe der Vorspannung durch die Grösse eines Spaltes zwischen einer oberen Stirnfläche (4a) einer Stützhülse (4) und einem horizontalen Bereich (1c) des Aussenring-Oberteils (1b) sowie durch die Steifigkeit des Aussenring-Oberteils (1b) bestimmt ist.

## Claims

1. Slewing bearing in a lightweight construction on a plain bearing base with the functional units outer ring (1), inner ring (3) and gliding elements arranged between them, which contain 2 substantially conical gliding surfaces (2f,2x), an area with a clamping edge (2h) and a bridge region (2j) as bearing body, **characterised in that** each gliding element (2) consists of 2 partial elements (2c, 2d), each of which has one substantially conical gliding surface (2f, 2x) and **in that** each gliding element (2) comprises connecting components (2q, 2l, 21) of a connection system with which the gliding elements are connected to one another and that the partial elements (2c, 2d) are connected to one another by means of prestressing screws (13) or connecting bolts (21), the prestressing screws (13) or connecting bolts (21) additionally applying a certain prestressing to the gliding surfaces (2f) by means of a spring assembly (14).

2. Slewing bearing according to claim 1, **characterised in that** each gliding element (2) has connecting components (2q respectively 2l) of a connection system at each free end in circumferential direction, which together form a snap connection of the type push-button (12).

3. Slewing bearing according to claim 2, **characterised in that** the snap connection (12) consists of a mushroom-shaped tenon (2l) at one end of each gliding element (2c respectively 2d) and an undercut recess (2q) at the other end of each gliding element (2c respectively 2d), and **in that** one of the connecting components is so elastic that the connection snaps into place when it is plugged together.

4. Slewing bearing according to one of the claims 2 to 3, **characterised in that** the connecting components of the connection system are integrated in one piece into the gliding elements (2).

5. Slewing bearing according to claims 2 to 3, **characterised in that** the gliding elements (2) have, at each free end, receptacles for separate connecting elements.

6. Slewing bearing according to claim 1, **characterised in that** the two partial elements (2c, 2d) of a gliding element (2) are connected to each other by connecting bolts (21) which form a rotary lock and have construction elements for additional functions, these construction elements being, on the one hand, positioning wings (21b) which, in a first position of the connecting bolt (21), fix the partial elements (2c, 2d) in a certain mutual position and, on the other hand, locking wings (21a), which compress the spring assembly (14) in a second position of the connecting bolt (21) and thus apply the prestressing to the gliding surfaces (2f, 2x).

7. Slewing bearing according to claim 6, **characterised in that** the connecting bolts (21) have the shape of a kind of two-bearded key.

8. Slewing bearing according to claim 7, **characterised in that** the partial elements (2c, 2d) are provided with a ratchet come (22) and a securing groove (23), which fix the connecting element (21) in an assembly position by means of positioning notches (21e) and secure it in an operating position by means of locking wings (21a).

9. Slewing bearing according to one of the claims 1 to 8, **characterised in that** the lower partial elements (2c) and the upper partial elements (2d) are clamped together by an outer ring upper part (1b) and **in that** the height of the prestressing is determined by the size of a gap between an upper end face (4a) of a supporting sleeve (4) and a horizontal region (1c) of the outer ring upper part (1b) and by the stiffness of the outer ring upper part (1b).

## Revendications

1. Palier du type couronne d'orientation en forme de palier lisse en construction légère avec les unités fonctionnelles bague extérieure (1), bague intérieure (3) et des éléments de glissement disposés entre eux, qui contiennent 2 surfaces de glissement essentiellement coniques (2f, 2x), une zone avec un bord de serrage (2h) et une zone de pont (2j) comme corps de palier, **caractérisé en ce que** chaque élément de glissement (2) est constitué de deux éléments partiels (2c, 2d), chacun d'eux ayant une surface de glissement essentiellement conique (2f, 2x) et que chaque élément de glissement (2) comprend des éléments de liaison(2q, 2l, 21) d'un système de liaison avec lequel les éléments de glissement sont reliés entre eux et les éléments partiels (2c, 2d) sont reliées entre eux par des vis de précontrainte (13) ou des boulons de liaison (21) fournissant en outre une précontrainte définie sur les surfaces de glissement au moyen d'un paquet de ressorts (14).

2. Palier du type couronne d'orientation selon la revendication 1, **caractérisé en ce que** chaque élément de glissement (2) présente des éléments de liaison (2q respectivement 2l) d'un système de connexion à chaque extrémité libre dans le sens circonférentiel, qui forment ensemble un connecteur encliquetable du type bouton-poussoir.

3. Palier du type couronne d'orientation selon la revendication 2, **caractérisé en ce que** le connecteur encliquetable (12) se compose d'un tenon en forme de champignon (2l) à l'une extrémité de chaque élément de glissement (2c respectivement 2d) et d'un évidement en retrait à l'autre extrémité de chaque élément de glissement (2c respectivement 2d), et **en ce que** l'un des éléments de raccordement est tellement élastique que le raccord s'enclenche lorsqu'il est emboîté.

4. Palier du type couronne d'orientation selon l'une des revendications 2 à 3, **caractérisé en ce que** les éléments de liaison du système de raccordement sont intégrés forment une seule pièce dans les éléments de glissement (2).

5. Palier du type couronne d'orientation selon l'une des revendications 2 à 3, **caractérisé en ce que** les éléments de glissement (2) présentent, à chaque extrémité libre, des logements pour des éléments de liaison séparés.

6. Palier du type couronne d'orientation selon la revendication 1, **caractérisé en ce que** les deux éléments partiels (2c, 2d) d'un élément de glissement (2) sont reliés entre eux par des boulons de liaison (21) qui forment un verrou rotatif et présentent des éléments de construction pour des fonctions supplémentaires où ces éléments de construction sont, d'une part, des ailettes de positionnement (21b) qui, dans une première position du boulon de liaison (21), fixent les éléments partiels (2c, 2d) dans une certaine position réciproque et, d'autre part, des ailettes de verrouillage (21a) qui, dans une deuxième position du boulon de liaison (21), compriment le paquet de ressorts (14) et appliquent ainsi la précontrainte du paquet de ressorts (14) sur les surfaces de glissement (2f, 2x).

7. Palier du type couronne d'orientation selon la revendication 6, **caractérisé en ce que** les boulons de liaison (21) ont la forme d'une sorte de clef à deux pannetons.

8. Palier du type couronne d'orientation selon la revendication 7, **caractérisé en ce que** les éléments partiels (2c, 2d) sont pourvues d'un peigne à grille (22) et d'une rainure de sécurité (23), qui fixent l'élément de liaison (21) dans une position de montage au moyen d'encoches de positionnement (21e) et le sécurisent dans une position de fonctionnement au moyen d'ailettes de verrouillage (21a).

9. Palier du type couronne d'orientation selon l'une des revendications 1 à 8, **caractérisé en ce que** les éléments partiels inférieures (2c) et les éléments partiels supérieures sont fixés ensemble par une partie supérieure de la bague extérieure (1b) et **en ce que** la hauteur de la précontrainte est déterminé par la taille d'un espace entre une face d'extrémité supérieure (4a) d'un manchon de support (4) et une zone horizontale (1c) de la partie supérieure de la bague extérieure (1b) et par la rigidité de la partie supérieure de la bague extérieure (1b).
